(19)

Europäisches Patentamt

European Patent Office

Office européen des brevets

(11) **EP 4 545 910 A1**

(12) **EUROPEAN PATENT APPLICATION**

(43) Date of publication:
**30.04.2025 Bulletin 2025/18**

(21) Application number: **23206454.3**

(22) Date of filing: **27.10.2023**

(51) International Patent Classification (IPC):
**G01D 5/14** (2006.01) **G01D 5/244** (2006.01)
**G01D 18/00** (2006.01)

(52) Cooperative Patent Classification (CPC):
**G01D 18/001; G01D 5/145; G01D 5/2449;**
**G01D 5/2452**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Melexis Technologies SA**
**2022 Bevaix (CH)**

(72) Inventors:
• **BRAJON, Bruno**
  **2022 Bevaix (CH)**
• **SCHOTT, Christian**
  **2022 Bevaix (CH)**

(74) Representative: **Winger**
**Mouterij 16 bus 101**
**3190 Boortmeerbeek (BE)**

(54) **POSITION SENSOR AND CALIBRATION**

(57)     A method of calibrating a magnetic sensor system and a sensor system are provided. The position of a magnetic structure with a master and nonius tracks is changed over a calibration range while measuring at least four components of the magnetic field generated by the magnetic structure. Uncorrected positions of the structure are determined and compared with corresponding reference positions. A periodic function is obtained by calculating two coefficients of the function, such that the function applied to the uncorrected positions minimize the error from the comparison with the reference positions.

FIG. 1

EP 4 545 910 A1

## Description

### Field of the invention

The invention relates to the field of position sensor. More specifically it relates to magnetic sensing systems and signal processing for position sensing.

### Background of the invention

Position sensing systems are usually included in devices where it is necessary to detect the position of some of their components. For example, many engines include angular position sensing systems to detect the relative position of the rotor relative to the stator, in order to ensure proper powering of the engine coils.

Contactless position sensors usually include a magnetic sensor and a moveable magnetic structure including multipolar magnets which improve resolution and accuracy of the relative positioning. Since the structures are divided into sectors, it is not possible to identify the position of the angle sector itself with just a magnetic sensor, so information relative to absolute angular position is lost.

To solve this, magnetic structures include two multipole magnetic tracks with different number of poles, so the full 360° range can be reconstructed by combining the signals of both tracks obtained by a pair of sensors. A combination between the signals from the two tracks is used to discriminate the sector, while the signal of the master track is used to measure the angle. However, these types of systems suffer from cross talk between the fields, so there are inaccuracies in the detected position.

It would be desirable to provide a method and sensor that allow position measurements with high accuracy.

### Summary of the invention

It is an object of embodiments of the present invention to provide a high-accuracy magnetic sensor system for a position sensor, composed of a two-track coded multi-pole magnet and a magnetic sensor, which allows correction of raw position data with low processing power and computational requirements.

In a first aspect, the present invention provides a method of calibrating a magnetic sensor system for a position sensor. The method comprises providing a movable magnetic structure including a master track and a nonius track, each track comprising multipoles. The number of multipoles of the master track is different from the number of multipoles of the nonius track.

The position of the magnetic structure is changed over a calibration range while measuring at least four components of the magnetic field generated by the magnetic structure, and respective (at least four) measurement signals are provided.

The method further comprises determining a plurality of uncorrected positions of the magnetic structure over the calibration range, based on ratios of the measurement signals. In parallel, a plurality of reference positions is provided. For example, the reference position can be provided so that they correspond to the measurements of the at least four components of the magnetic field.

Then, the plurality of uncorrected positions are combined with at least one periodic correction function, the periodic correction function being a function of the uncorrected positions and having two function coefficients adapted to minimize a position error over the calibration range between the reference positions and the uncorrected positions of the magnetic structure; the error may include for example error induced by the cross talk between the two tracks.

It is an advantage of embodiments of the present invention that errors induced by cross talk are reduced.

In some embodiments, the method further comprises obtaining the plurality of reference positions using a reference encoder. It is an advantage that the encoder may have high accuracy and may be used only during calibration.

In some embodiments, obtaining the position of the magnetic structure further comprises performing amplitude and phase matching of the measurement signals.

In some embodiments obtaining the calibration coefficient comprises obtaining the calibration coefficient uncorrected positions and at most two periodic correction functions.

It is an advantage of embodiments of the present invention that a simple calculation can be used to provide calibration coefficients, rather than lengthy series with multiple terms.

In some embodiments, the method further comprises defining a harmonic of the at least one periodic function, being equal to the difference between the number of multipoles of the master track and the number of multipoles of the nonius track.

In some embodiments, the method further comprises defining a harmonic of the at least one periodic function beomg equal to the sum of the number of multipoles of the master track and the number of multipoles of the nonius track. It is an advantage that the contribution of harmonics in the error curve due to the cross talk can be reduced.

In some embodiments, measuring at least four components comprises measuring at least two pairs of orthogonal components, e.g. at two locations.

It is an advantage that Hall sensors can be used to implement such measurements, allowing simultaneous measurements of two orthogonal components.

In some embodiments, the method further comprises further comprising determining a plurality of corrected positions based on the correction function and linearizing the corrected positions to match the reference positions. It is an advantage that non-linearity due to the imperfections of the magnet can be compensated.

In some embodiments, linearizing the corrected positions comprises providing a corrective value by interpolation of points stored in a look-up table.

It is an advantage that the linearization can be done by interpolation.

In a further aspect, the present invention provides a method of sensing the position of a magnetic structure comprising providing the calibration coefficient by following the method of any one of the previous claims, determining the position of the magnetic structure , and applying the calibration function being the periodic function with the calibration coefficients calculated during calibration. For example, the same periodic function can be applied.

In some embodiments, measuring the position further comprises using a counter to track the change of position of the magnetic structure.

It is an advantage that the calibration coefficient can be obtained once at start-up.

In a further aspect, the present invention provides a magnetic sensor system for a position sensor comprising a movable magnetic structure including a master track and nonius track, each track comprising multipoles wherein the number of multipoles of the master track is different from the number of multipoles of the nonius track. The system further comprises a magnetic sensor configured to measure at least four components of the magnetic field and provide respective measurement signals. The system further comprises a processing unit for processing measurement signals programmed with the calibration coefficient obtained by any one of the previous claims.

In some embodiments, the system further comprises further comprising control means for controlling the acquisition of measurement signals for performing the method in accordance with any embodiments of the first aspect of the present invention, upon start up of the movement.

In some embodiments, the system further comprises a counter for providing information of the position of the master track.

It is an advantage of embodiments of the present invention that the calibration may be only done at the start. It is a further advantage that only measurement of two components of the field is required during operation, thus reducing data load.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

**Brief description of the drawings**

FIG 1 is a schematic method of calibrating a magnetic sensing system for a position sensor in accordance with embodiments of the present invention.

FIG 2 is a schematic method of operating a magnetic sensing system calibrated in accordance with embodiments of the present invention.

FIG 3 and FIG 4 show the signal path from the magnetic structure to the output, in the case of obtaining the calibration coefficients, and in the case of using the coefficients for correcting the output of a sensor in operation, respectively.

FIG 5 shows the error reduction after applying calibration steps in accordance with embodiments of the present invention.

FIG 6 to FIG 8 show three different magnetic structures for use in embodiments of the present invention.

The drawings are only schematic and are non-limiting. In the drawings, the size of some of the elements may be exaggerated and not drawn on scale for illustrative purposes.

Any reference signs in the claims shall not be construed as limiting the scope.

In the different drawings, the same reference signs refer to the same or analogous elements.

**Detailed description of illustrative embodiments**

The present invention will be described with respect to particular embodiments and with reference to certain drawings but the invention is not limited thereto but only by the claims. The dimensions and the relative dimensions do not correspond to actual reductions to practice of the invention.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. The term "comprising" therefore covers the situation where only the stated features are present and the situation where these features and one or more other features are present. Thus, the scope of the expression "a device comprising means A and B" should not be interpreted as being limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Where in embodiments of the present invention reference is made to "raw position", reference is made to the position calculated with the raw signals from the sensor, without applying the correction of the present invention. The position calculated this way includes an error which should be minimized. Throughout the description and claims it may also be called "uncorrected position".

The present invention relates to a calibration method and a magnetic sensor system which can be used as a position sensor. The magnetic sensor system includes a moveable two-track coded multi-pole magnetic structure, the magnetic structure including a master track and a nonius track. Further the system comprises a magnetic sensor adapted to provide at least four signals of the magnetic field, representative of components of the field in at least two positions. For example the sensor may include a plurality of sensing elements, for example it may be a dual-spot multi-axes magnetic sensor. For example, the calibration allows to deliver in practice 13 bits of absolute accuracy and 17 bits of resolution over the full 360° range. The calibration method may be implemented in the magnetic sensor system including suitable processors, controllers, signal transmission means and the like.

In a first aspect, a calibration method is provided.

The calibration method provides a minimization of errors in the positional domain rather than in the magnetic domain, thus first the raw positions are obtained over a calibration range, and from the raw positions, the position errors are obtained over the calibration range. The calibration can be implemented such as to minimize the average error over the calibration range, or the sum of errors, or the sum of square of errors, etc. From the errors over the calibration range, it is possible to apply a limited number of periodic correction functions, e.g. less than three, and use the coefficients of these periodic functions to correct position errors in operation mode. It is advantageous that a limited amount of calibration functions is needed, rather than using long series with many coefficients.

The method comprises measurement of four magnetic field components in at least two different positions associated with each magnet track. The raw positions are computed based on the magnetic field values. Reference positions over the calibration range are also received, and using both, position errors over the range are obtained. The method comprises computing coefficients of a periodic function, e.g. at least one or at least two periodic functions, minimizing position errors across the calibration range.

These coefficients are the calibration coefficients. They can be programmed on a sensor chip memory to be used later as the sensor is used, for example as a position sensor.

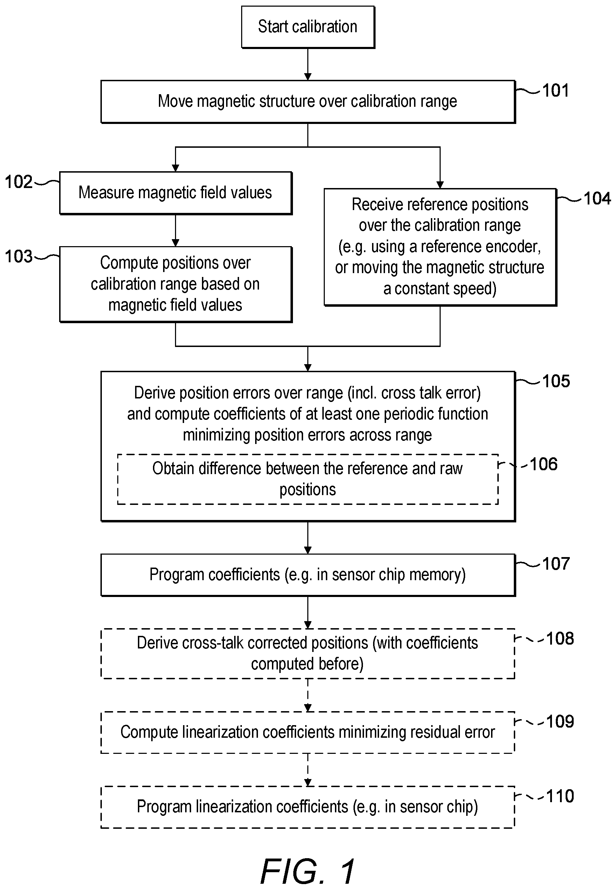

FIG 1 is a scheme of a calibration method in accordance with some embodiments of the present invention. The method comprises starting the calibration, for example a 'calibration mode'. The method comprises subsequently moving 101 the magnetic structure over the calibration range. The magnetic field is measured 102 with a sensor, thus obtaining at least four measurement signals, and reference positions are obtained 104 over the calibration range.

In some embodiments, measuring 102 the field comprises measuring orthogonal pairs of components of the field, so the obtained signals are representative of two pairs of orthogonal field components, Bx1, Bz1, Bx2, Bz2, obtained at two different positions 1 and 2. This can be done with sensing elements which are configured to provide two orthogonal components in two different positions along the magnetic structure. In some embodiments, some sensing elements overlap one track with the rest of sensing elements overlap the other track, so the contribution of the field sensed by a group of elements is predominantly due to the master track while the contribution sensed by the other group is dominated by the nonius track. In some embodiments, some sensing elements may be in a position where the magnetic field includes a large contribution of the master track and a relatively small contribution of the nonius track, and other sensing elements may be in another position where the field shows a relatively large contribution of both tracks. For example, the magnetic sensor may comprise Hall elements optionally combined with magnetic concentrators. In some embodiments of the invention, some or all the sensing elements are located above a code-free region disposed between the tracks.

In some embodiments, measuring 102 the field comprises measuring four components of the field in four different positions, for example two pairs of Bz components. These components may be obtained from four sensing elements, where some of them (e.g. two sensing elements) measure the field at a position or positions where the magnetic field includes a large contribution of the master track and a relatively small contribution of the nonius track, and some of them (e.g. two sensing elements) measure the field at other position or positions where the field shows a relatively large contribution of both tracks.

The field may be measured in a plurality of steps along the calibration range. At least four components of the field are measured in each step. For example, 100 steps, or 200 steps, or 500 steps or more can be measured along the calibration range. In embodiments wherein the magnetic structure is a rotary encoder, the calibration range may comprise a whole turn of the encoder (360 degrees). In such case, four measurements of field components are provided in steps of 3 degrees or less than 3 degrees, or 1 degree or less than 1 degree, 0.5 degrees or less than 0.5 degrees, or in steps of 0.1 degrees, or even less than 0.1 degrees, for determining the raw positions for calibration. An advantage is that a limited number of steps can be used, so calibration can be fast. In some embodiments, for example, 1000 steps or less, e.g. 500 steps or less, e.g. 300 steps or less, are used. The magnetic structure can be moved once over the calibration range (e.g. only one full turn), or can also be moved multiple times over the calibration range.

The method comprises subsequently determining or computing 103 positions over the calibration range, based on the magnetic field values, for example obtained directly from the measured values of the field, thus these positions are 'raw' or 'uncorrected positions'. In particular, the raw positions are obtained based on the ratios of the measurement signals (optionally including pre-processing). At this stage, the raw position is not calibrated, and it comprises the error due to cross talk between the tracks, for example.

In some embodiments of the present invention, obtaining the raw position comprises performing amplitude and phase matching of the measurement signals before obtaining the raw positions, the present invention not being limited thereto.

The method also comprises receiving 104 reference positions over the calibration range. This can be done as a separate step, for example but not only in parallel. This can be used for example using a reference encoder, which may be an external unit. The reference encoder can be of various technologies, e.g. optical, or magnetic. Alternatively, or additionally, reference positions may be obtained by moving the magnetic structure at a predetermined speed, e.g. a constant speed. When the magnetic structure moves at constant speed (v) and the magnetic field is sampled at a constant interval of time (dt), then the reference position is determined as $p=v.dt.a$, where a is the acquisition number, and/or by obtaining the integral of dt and combining it with the speed, e.g. multiplying it with the speed, e.g. $p=v.integral(dt)$

The method subsequently comprises the step of deriving 105 position errors over the calibration range (including cross talk error).

At this point, the position error across the calibration range can be minimized, by computing the coefficients of at least one periodic function. These coefficients may comprise e.g. amplitude and phase of the periodic function. The computation may entail, for example, solving a minimization problem on the position errors over the range. For example, least means squares can be used. The coefficients of the periodic function are the correction or calibration coefficients, which are calculated from the available data of the plurality of positions.

Deriving position errors comprises comparing the raw (or uncorrected) position obtained from the measured magnetic fields and the received reference positions. Deriving the position error can be done in different ways. As a first example, the coefficients can be determined by function matching, so that the raw positions and the periodic function of the raw positions matches the reference positions.

For example, the data of the raw positions applied to the periodic function is made to match the positions of the reference. For example, the coefficients of the correction function can be determined such that the function $p\_uncorrect - A \sin(j.p\_uncorrect + B)$ matches the curve of the reference positions, $p\_ref$ (by least squares, curve fitting, regression...). The coefficients of the periodic function are the amplitude A and phase B, in this particular case. The term j can be a harmonic of the function, which may be determined by the magnetic structure, in particular by the number of poles of each track. Each periodic function used for providing the calibration coefficients may correspond to a harmonic.

The present invention is not limited to this calculation. In some embodiments, the error for each position of the plurality is calculated 106 as a difference between the raw position and the reference position measured for the same position or measurement step, e.g. in parallel, so that:

$err = p\_uncorrected - p\_ref$ .

Then, the coefficients of the at least one correction function are determined such that the error is minimized, for example the coefficients A and B of $err - A \sin(j.p\_uncorrect + B)$ are optimized such that the error is minimized (e.g. sum of the square of the errors, $err^2$, is as small as possible, the present invention not being limited to that minimization method).

The coefficients can be programmed 107, or stored, for correcting the raw position during operation of a sensor implemented with the technical means to carry out the method, for example a sensor chip memory.

In some embodiments, the position can be further corrected from cross talk errors, deriving 108 said positions with coefficients computed in the previous steps. This allows to compute the corrected positions, based on said coefficients.

In some embodiments, residual error can be minimized by computing 109 linearization coefficients using previous coefficients. The non-linearity errors stem from imperfections in the magnet and such, for example. To compensate for this, a Look-Up-Table (LUT) can store the reference angle information for predetermined measured angle positions. This can be done using a limited number of points defining a piece-wise linear correction function. Then the corrective value is found through interpolation of the LUT points according to the measured position. These linearization coefficients can be programmed 110 or stored in the chip.

In some embodiments, computing the coefficients comprises providing a periodic function dependent on the number of pole pairs. Since the number is different, the magnetic field can be described by inclusion of a term with a component from the mismatch of the pairing. For example, the periodic function or functions may describe one or more harmonics around a whole period of the calibration range. In case of circular magnetic structures, the calibration range may comprise a period wherein a linear magnetic structure repeats its pattern, for example a 360 degree turn. However, the present method can be applied to linear magnetic structures so long as they comprise a master and nonius tracks with different number of pole pairs.

In some embodiments, a periodic function may be dependent on the difference of the number of pole pairs. In some embodiments, a periodic function may be dependent on the sum of the number of pole pairs. Yet in some embodiments, the periodic function may depend on both. For example, two periodic functions can be used, e.g. the combination thereof, each depending on the sum and on the difference of number of pole pairs.

The calibration can be applied to position sensing in operation. An object moves, causing the relative motion between a magnetic sensor and a magnetic structure as described above. The position is read by sensing the changes of the field. It is desirable to correct the position sensing by measuring the magnetic field values from the sensor chip, obtaining the position value and, using the calibration coefficients stored in a memory, obtaining the corrected position.

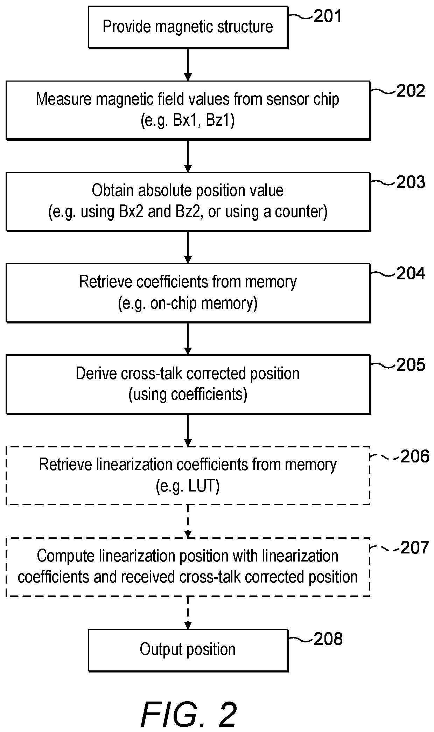

FIG 2 is a scheme of a position sensing method in accordance with some embodiments of the present invention, wherein the calibration coefficients have been determined. The method comprises providing 201 the magnetic structure specified above, and while in operation, measuring 202 field values with the sensor chip. For example, only two values may be required, for example the values corresponding to the magnetic field with relatively small contribution from the nonius track, e.g. $Bx1$, $Bz1$. The present invention is not limited to this, and a different set of components may be measured.

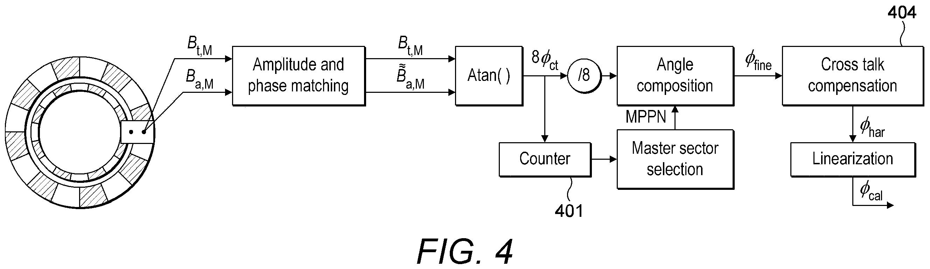

The absolute position value is the value of the position after sector determination, thus after combining the information from the nonius track. This can be computed or obtained 203 from the sensed values of the magnetic field components, for example by measuring field components, e.g. two components $Bx1$, $Bz1$ as mentioned earlier, and two other components with a different set of sensing elements Bx2, Bz2 (e.g. from the sensor where the field has a relatively large contribution from the nonius track). The present invention is not limited to this, and the absolute position may be obtained by using a counter. This is shown in FIG 4. It is advantageous that for the calibration four components are required, but the operation, only a counter and two components may be used, so the counter keeps track of the change of the relative position between the sensor chip and the movable magnetic structure. This reduces processing power and time requirements.

The stored coefficients, previously obtained during calibration, are retrieved 204 from a memory, such as a LUT. The cross talk corrected position is derived 205 using the measurements and the coefficients.

In some embodiments, the linearization coefficients are retrieved 206 from a memory (e.g. a LUT), if these are available. Using said linearization coefficients and the cross talk corrected position derived earlier, the linearized position can be computed 207 . The signal representative of the position is sent 208 to an output, e.g. another system, a display, memory, etc.

In some embodiments, one or two periodic functions are applied. For example, each function may correspond to a different harmonic stemming from the field generated by the structure with different number of poles, so that the first function corresponds to a first harmonic (e.g. M-N, where M and N are the number of pole pairs of the master and nonius tracks) and the second function may correspond to a second harmonic (e.g. M+N).

In some embodiments, the coefficients correspond to the amplitude and phase of the periodic function.

While the present invention can be applied to any suitable shape of magnetic structure (including linear, circular, cylindrical, etc.), in the following the particular example of a planar and circular structure is discussed.

In a further aspect, a magnetic sensor system is provided. Such system can be used as a position sensor. In general, in order to measure the position of a moveable device, the magnetic structure of the magnetic sensor system moves solidarily with the moveable device, and a magnetic sensor provides the accurate position by implementing the method of embodiments of the previous aspects of the present invention, including e.g. calibration. Thus, the magnetic sensor system comprises a magnetic sensor and the movable magnetic structure including a master track and nonius track. The shape may be any suitable to be used with these sensors, however the number of pole pairs in each track is different.

The magnetic structure may be any existing structure with multiple periodicities, for example a structure with a master and nonius tracks including a different number of poles.

The magnetic structure may be or may comprise one or more permanent magnets, or may be formed as a monolithic piece of magnetic material, or may be composed of two monolithic pieces of magnetic material, such as for example two linear strips, or two magnetic rings mounted together.

In general, the number of pole pairs between master and nonius tracks must have unity as the greatest common divisor.

In an embodiment, a ratio of the first number of pole pairs (N1) and the second number of pole pairs (N2) is (N-1)/N, where N is an integer number in the range from 5 to 32, preferably in the range from 5 to 16, for example N1=4 and N2=5, or N1=5 and N2=6, or N1=6 and N2=7, or ..., or N1=31 and N2=21.

In an embodiment, a ratio of the first number of pole pairs (N1) and the second number of pole pairs (N2) is (N-2)/N, where N is an odd integer number in the range from 5 to 31, preferably in the range from 5 to 17, for example N1=5 and N2=7, or N1=7 and N2=9, or N1=9 and N2=11, or N1=11 and N2=13, or N1=13 and N2=15, or N1=15 and N1=17, or N1=17 and N2=19, or N1=19 and N2=21, or N1=21 and N2=23, or N1=23 and N2=25, or N1=25 and N2=27, or N1=27 and N2=29, or N1=29 and N2=31.

In an embodiment, the master and nonius tracks of the structure are nested rectangular toroids. In an embodiment, the magnetic structure comprises two substantially linear strips of magnetic material, spaced from each other by a layer or a zone of a non-magnetic material. The non-magnetic material may have a thickness of at least 0.5 mm, or a thickness in the range from about 0.5 mm to 1.5 mm. Alternatively, the two strips are separated from each other by means of groove.

Now turning to the magnetic sensor, it includes means to provide four signals representative components of the magnetic field at different positions over the magnetic structure. For example, two pairs of sensing elements may be provided. For example, Hall sensing elements and magnetic concentrators can be used. Other elements may be used, such as magnetoresistive elements and the like, e.g. GMR, TMR, fluxgate sensors, etc. The four magnetic components measured in at least two different positions may be e.g. two orthogonal components in each position.

Each position is selected in accordance with the relative position with the magnetic structure, for example a first position may measure a field with little contribution from the nonius track (e.g. Bx1, Bz1), while the second position has a large contribution of at least the nonius, optionally of both (e.g. Bx2, By2).

The magnetic sensor may be integrated as a sensor chip, with all the required sensing elements, powering units and the like.

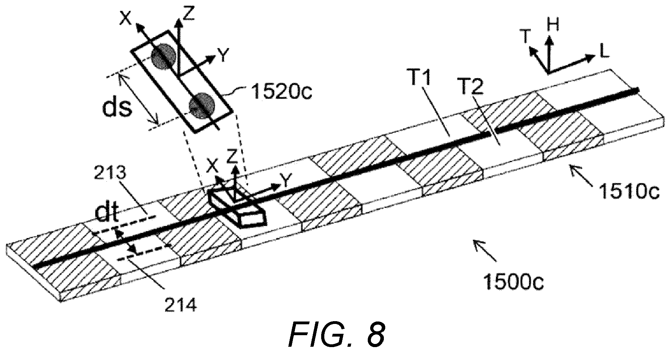

The magnetic sensor may comprise distributed sensing elements, such as Hall sensing elements distributed on a plane. Examples of these sensors are described in document EP4019905 B1 in particular in paragraphs [0130] to [0135], [0139] to [0142] as described with reference to FIG. 8(a) to 8(h).

The magnetic sensor system may comprise a processing unit for processing measurement signals. The processing unit may be implemented, for example, as a separate unit, but may be integrated in the sensor chip. A memory module, LUT and the like may be included, e.g. also in the sensor chip and connected to the processing unit, to store and retrieve calibration coefficients.

The magnetic sensor system may comprise a controller for controlling the measurement of the field at a plurality of calibration positions of the magnetic structure.

The processing unit may be programmed to perform the required steps of the method of calibration and of operation. For example, it may be configured to retrieve the raw position and obtain by calculation the calibration coefficients, e.g. applying one or more periodic functions as explained above. It may be configured also to provide the raw position from the measurement signals generated by the magnetic sensor, but the present invention is not limited thereto.

The processing unit may also be configured to provide cross talk corrected positions from the coefficients. Similarly, it may be programmed to compute linearization coefficients, and store them in memory.

In some embodiments the processing unit may also be programmed to apply calibration coefficients to the raw position data calculated during operation thus obtaining the cross talk corrected position. In some embodiments, the raw position data is also processed by the processing unit. The processing unit may also be configured to perform further corrections as described with reference to the method of the previous aspects. For example the processing unit may be programmed to apply, during operation of the sensor, the linearization coefficients if available in a memory. The cross talk corrected position and the linearization coefficients are then used to compute linearized position.

The magnetic sensor system may comprise means to obtain the reference position. This may be for example a means (actuators, etc.) for providing a constant speed of the magnetic structure relative to the magnetic sensor. In another embodiment, a separate high-accuracy magnetic sensor is provided with its own magnet and sensor chip as a reference encoder. Both systems are calibrated after assembly to eliminate the impact of manufacturing and assembly tolerances on the position output.

In the following, an example of sensing and calibration method implemented on a sensor chip with two Hall elements.

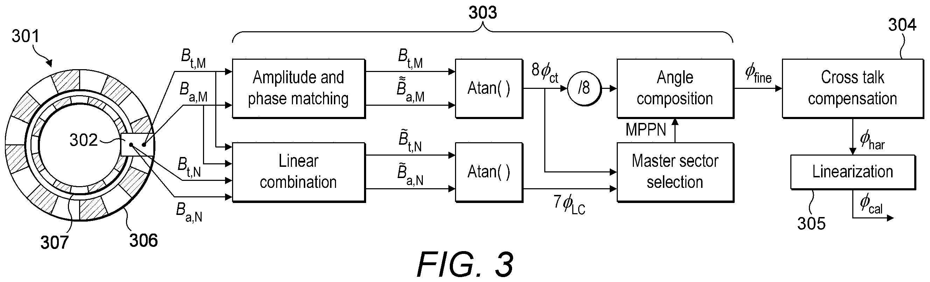

FIG 3 shows an example of such setup . The magnetic structure 301 includes a master track with 8 pole pairs and a nonius track with 7 pole pairs. The nonius and master tracks are designed so that the magnetic field has a main contribution from the master track, and the small contribution of the nonius track is sufficient to 'break the symmetry', so it is possible to measure the absolute position with some degree of certainty. The magnetic sensor 302 overlaps the magnetic structure, so that one sensing element receives a large contribution from the master track and small contribution from the nonius track, while the other element receives a large contribution from the nonius. Each sensing element provides two signals representative of two orthogonal components of the field, for the master track ($Bt_M$, $Ba_M$, for the transversal and axial components respectively) and for the nonius track ($Bt_N$, $Ba_N$).

FIG 3 also shows the signal flow from the magnet to the output, for the case of calibration. The stages 303 up to 'angle composition' correspond to obtaining the raw position, in this case an angle, from the measurement signals. In general terms, the signals from the sensing elements of the master track (measuring components $Bt_M$, $Ba_M$) first are processed by amplitude and phase matching, and an angle is calculated (e.g. by the arctan of the ratio of the measured signals). The angle includes cross-talk terms ($\phi_{ct}$). These signals are also linearly combined with the signals from the signal element of the nonius track, and a second angle (linear-combination angle, $\phi_{LC}$) is calculated. This allows to assign a unique sector number ranging from 0 to 7 to each pole pair of the master track ('master pole pair number', MPPN). Thus, a fine angle $\phi_{fine}$ is obtained. This angle represents the raw angle of the magnetic structure. This data treatment may be performed in a processing unit which may be part of the magnetic sensor system.

More in detail, the signals obtained by the magnetic sensor by the sensing element of the master track and the one of the nonius tracks are $Ba_M$, $Bt_M$ and $Ba_N$, $Bt_N$. respectively,

$$1) \qquad Sin(M*x) = A1* Bt_M + A2* Ba_M + A3* Bt_N + A4* Ba_N$$

$$2) \qquad Cos(M*x) = A5* Bt_M + A6* Ba_M + A7* Bt_N + A8* Ba_N$$

$$3) \qquad Sin((N)*x) = A9* Bt_M + A10* Ba_M + A11* Bt_N + A12* Ba_N$$

$$4) \qquad Cos((N)*x) = A13* Bt_M + A14* Ba_M + A15* Bt_N + A16* Ba_N$$

The master track has a predetermined number M of pole pairs, and the nonius track has a lower number N than the master track, e.g. one less. The two first combinations 1), 2) are the quadrature components (Sin and Cos) of the master track, and the components include the crosstalk components of the second sensor (corresponding to the nonius track). The other two combinations 3), 4) are the components of the nonius track, including components also of the measurement from the first sensor, due to the crosstalk.

The present invention provides a cross-talk compensation 304 where there is no need to extract compensation terms for the measurement signals, by receiving during calibration a limited number of reference positions (angles in this case). However, instead of storing the reference angles, a limited number of periodic functions are applied to the raw angles and compared to the reference positions, and the error between the raw angle and the reference angle is minimized by any suitable means of data processing, including curve fitting, regression, etc. For each function, only two coefficients may be needed, being for example the amplitude and phase of the periodic function. The minimization of the error results in a calibration angle which can be linearized 305. The calibration coefficients (linearized or not) can be stored in a memory.

FIG 4 shows the signal flow from the magnet to the output during operation. The position of the master track is sensed (although it may include cross talk from the nonius track), however in this case a counter 401 can keep track of the position for master sector selection, with no need to process signals from the sensing element corresponding to the nonius track.

After obtaining the raw position, the inverse operation is performed. This time the reference positions are not required. The values of the raw position are corrected and compensated 404 using a periodic function, by applying the coefficients stored during calibration. A final step of linearization can be performed.

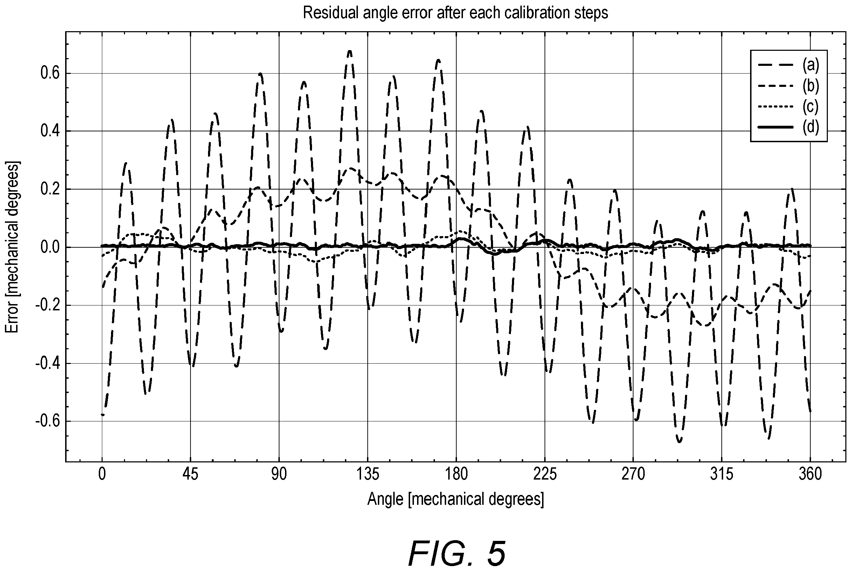

FIG 5 is a graph with the residual error after four successive steps of calibration, in a complete turn of the magnetic structure (360 degrees). The error is given in mechanical degrees. This error is obtained from the difference between the received reference position and the position computed at each step.. The curve (a) shows the raw data computed over the calibration range in the absence of amplitude and phase matching of the measurement signals, based on magnetic field values (see FIG 1). The curve (b) is obtained after deriving the position errors (see corresponding step 105 in FIG 1) when amplitude and phase matching is applied to the measurement signals and represents the angular error before applying the calibration method (e.g. input of blocks 304 and 404). The presence of a 1st harmonic and a 15th harmonic can be noticed in the error curve.

These harmonics depend on the number of poles. In the particular example of FIG 3, since the number M of pole pairs of the master track is 8 and the number N of pole pairs in the nonius track is 7, the harmonics correspond to M-N (1st harmonic) and M+N (15th harmonic). It is possible to reduce the contribution of these harmonics by solving a minimization problem in the form of:

$$\phi_{\text{har}} = \phi_{\text{fine}} - \sum_{h \in \{1,15\}} j_h \sin(h\phi_{\text{fine}} + p_h)$$

The parameter h indicates the harmonic . The calibration coefficients are the amplitude $j_h$ and phase $p_h$, for each of the two periodic functions.

The present invention is not limited to obtaining the periodic functions of two harmonics, only one may be used. For example, the lowest harmonic (M-N) may be used, since in general it shows a larger influence in the error.

Once the cross talk corrected positions have been derived, they can be applied to the raw positions in order to correct them. This can be done in calibration and/or during operation, in the corresponding step of deriving 108, 205 cross-talk corrected position in FIG 1 and FIG 2. The resulting corrected curve (c) is also shown in FIG 5.

Finally the linearized position can be obtained 207, using linearization errors computed 109 during calibration to minimize residual error. The final error is close to 0, as shown in curve (d) in FIG 5. During calibration, this means that the reference positions coincide with the positions calculated from the measurements. These parameters used to obtain the curve (c) in FIG 5 are stored, to be used during operation, where a simple computation using only one or two periodic functions need to be performed.

The present invention allows to obtain calibration coefficients with no need to extract the cross-talk components. During calibration, the field is measured for many positions, e.g. hundreds of positions (for a rotatable structure, for example, 720 positions, or positions at a step of 0.5 degree). The values of the field (e.g. its ratios) are used to directly obtain, without corrections or the like, the values of position, these being the 'uncorrected positions' or raw positions. For each measurement, a reference value is obtained. This can be obtained in different ways, for example simultaneously, using a high precision encoder or the like. Thus, two sets of values are obtained: raw positions and reference positions. Instead of saving the reference positions, a periodic function is obtained, wherein its coefficients (e.g. amplitude and phase) are calculated such that the reference positions coincide with the positions obtained by the magnetic sensor (by adding the function, for example), for each corresponding value of the position. The coefficients of the periodic function are the ones stored. The periodic function or functions may be for example based on harmonics, for example two functions may be used for two harmonics, based on the number of pole pairs of the tracks (a harmonic for M-N, another for M+N). Only two coefficients are needed per function, and one or two functions may be used, so even if hundreds of positions are measured and compared, in the end only two or four coefficients need to be stored.

Upon operation, the raw positions measured by the sensing system are corrected by retrieving the coefficients and applying the correction using the periodic functions.

The method does not require to extract specific information related to cross talk, or the like, but it is not excluded. The correction is applied on the angle obtained from the sensor signals, rather than on the sensor signals.

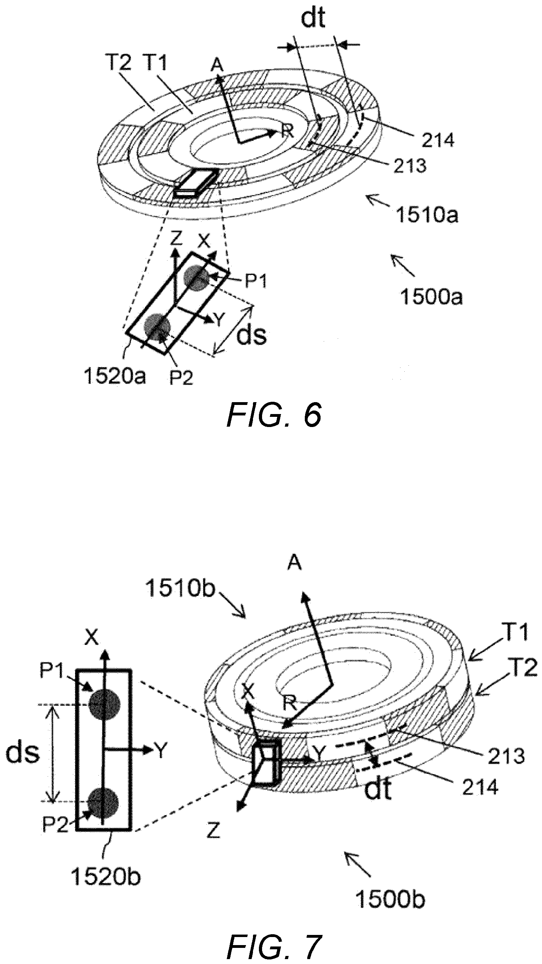

Different magnetic structures and magnetic sensors can be used. FIG 6 to FIG 8 shows several magnetic sensing systems which can be used in embodiments of the present invention.

FIG 6 shows a system 1500a comprising a magnetic structure 1510a comprising two concentric tracks located in a single plane, and a sensor 1520a arranged above or below that plane. In the example, the first track T1 is formed by an inner ring having eight poles, and the second track T2 is formed by an outer ring having ten poles. These rings are preferably axially magnetized. The sensor "sees" eight poles when moving over the inner ring, and "sees" ten poles when moving over the outer ring (or when the sensor is stationary and the magnetic structure is rotated). The centrelines 223, 224 of these tracks are two concentric circles having a different radius. The centrelines 223, 224 are spaced apart by a track distance "dt" in the radial direction. The distance between the sensor locations P1 and P2 of the sensor is "ds", which may be smaller than the track distance "dt", preferably at least 20% smaller. The first and second sensor location P1, P2 are preferably located on a virtual line X which is radially oriented with respect to the magnetic structure. There may be an uncoded region, e.g. in the form of a circular groove situated between the tracks T1, T2, optionally filled with a non-magnetic material.

FIG 7 shows a system 1500b comprising a magnetic structure 1510b comprising two cylindrical tracks having a same radius, and a sensor 1520b arranged as a satellite movable around these cylindrical tracks (or vice versa). The centrelines 223, 224 of the first and second track T1, T2 is a first circle and a second circle, a portion of which is shown in FIG. 7 . These centrelines 223, 224 are spaced apart by a track distance "dt" in the axial direction A. There may be an uncoded region, e.g. in the form of a circular groove situated between the tracks T1, T2, optionally filled with a non-magnetic material.

FIG 8 shows a linear system 1500c comprising a magnetic structure 1510c comprising two parallel, linear tracks T1, T2 located in a single plane, and a sensor 1520c arranged above or below that plane. Also shown is an orthogonal coordinate system connected to the magnetic structure, comprising a height direction H, a longitudinal direction L, and a transverse direction T. In the example shown, the first track T1 is formed by a first multi-pole magnet having eight poles, and the second track T2 is formed by a second multi-pole magnet having ten poles . These magnets are preferably magnetized in the height direction H. The sensor 1520c "sees" eight poles (four North poles and four south poles) of the first track T1, and ten poles of the second track T2, when moving over the magnetic structure in the longitudinal direction L (or vice versa). The centrelines 223, 224 of these tracks are two parallel lines, spaced apart by a track distance "dt" in the transverse direction T. There may be an uncoded region, e.g. in the form of a circular groove situated between the tracks T1, T2, optionally filled with a non-magnetic material.

In some embodiments, the master and nonius tracks are coplanar tracks, axially magnetized. The sensors can be placed above or below the tracks, in a plane parallel to the tracks, so the Z component of the field is the axial direction. For example, a sensor chip may include all the sensors, e.g. the sensors may be monolithically integrated with the chip parallel to the tracks. This way, rotating motion of the tracks relative to the sensors are detected as a changing magnetic field and orientation thereof.

In particular, the nonius track may be enclosed by the master track for practical reasons, as the nonius track has lesser of poles than the master track.

In some embodiments, as mentioned earlier, the master track provides a much higher magnetic field than the nonius track, e.g. the maximum magnetic flux density which is 2 times larger, for example 3 or 6 times larger, for at least two components of the field, for example two orthogonal components of the field. In some embodiments, the master track is made of a magnetic material with a larger magnetization than the nonius track. Many combinations could be envisaged, for example neodymium-based magnets for the master track, with ferrite magnet in the nonius. In some embodiments, the two tracks may comprise neodymium-based alloys, with a different content of magnetic material. For example, the first track may comprise a high content or almost exclusive content of FeNdB, while the second track comprises FeNdB in a plastic matrix (also called plastic bonded magnet), so the content of magnetic material, and ultimately the strength of the second track, are lowered. Alternatively or additionally, the relative size and geometry of the magnets may be adapted to obtain the desired effect. For example, the master track may comprise larger magnets than the nonius track in at least one dimension. For example, the tracks of the magnetic structure may have the same thickness and be made of the same materials, which offers mechanical advantages in rotatable systems (e.g. uniform distribution when the magnetic structure is movable), but the master track has a width at least twice as large as the width of the coplanar nonius track, for example thrice as large, for example at least six times larger than the width of the coplanar nonius track. The present invention is not limited thereto, and both the shape, size and materials of the poles in the master track may be different from the poles in the nonius track. FIG 3 shows a master track 306 with 8 pole pairs, where each black zone is a N or S pole. The nonius track 307 has 7 pole pairs, where the magnets are much smaller than the magnets of the master track. When the magnetic structure turns around its centre in a plane perpendicular to the axis A, the sensors at the positions next to the master and nonius tracks obtain signals of the magnetic field, wherein at the position overlapping the master track the signals from the field of the master track are dominant and the ones of the nonius can be disregarded, while in the position there is a large cross-talk. The sensor chip can be positioned so as to enhance this effect.

The flux density for the axial and tangential components, sensed by the sensors, may be twice larger for the sensing elements of the master track than for the ones of the nonius track, for example the maximum flux density for said components, This can be applied to other configurations of the magnetic tracks, and for different components of the field.

For example the first track has an area five times larger than the second track, for example 20 times larger, for example 10 times larger. Generally, the first track may be for example between 5 times and 50 times larger, for example between 10 times and 30 times larger, than the second track.

The cylindrical setup shown in FIG 7 where the tracks of the structure 200 are rings stacked in the axial direction (A) may also have inequal tracks. The dimensions can be adjusted to obtain the desired ratio of magnetic fields generated by the tracks, as mentioned earlier. The same may apply to a linear magnetic structure that comprises parallel first and second linear tracks.

In embodiments of the present invention, the magnetic structure is a magnetic piece where the tracks are fixed to each other. In some embodiments of the present invention, the structure includes a gap between the first and second tracks. The gap may be filled with non-magnetic material. The presence of the gap helps reducing crosstalk between the magnetic structures.

**Claims**

1. A method of calibrating a magnetic sensor system for a position sensor comprising providing a movable magnetic structure including a master track and a nonius track, each track comprising multipoles wherein the number of multipoles of the master track is different from the number of multipoles of the nonius track,

   changing the position of the magnetic structure over a calibration range while measuring at least four components of the magnetic field generated by the magnetic structure, and provide respective measurement signals,
   determining a plurality of uncorrected positions of the magnetic structure over the calibration range based on ratios of the measurement signals,
   obtaining a plurality of reference positions,
   combining the plurality of uncorrected positions and at least one periodic correction function, the periodic correction function being a function of the uncorrected positions and having two function coefficients adapted to minimize a position error over the calibration range between the reference positions and the uncorrected positions of the magnetic structure induced by the cross talk between the two tracks.

2. The method of the previous claim further comprising obtaining the plurality of reference positions using a reference encoder.

3. The method of any one of the previous claims wherein obtaining the position of the magnetic structure further comprises performing amplitude and phase matching of the measurement signals.

4. The method of any one of the previous claims wherein obtaining the calibration coefficient comprises obtaining the calibration coefficient uncorrected positions and at most two periodic correction functions.

5. The method of any one of the previous claims wherein a harmonic of the at least one periodic function can be defined as equal to the difference between the number of multipoles of the master track and the number of multipoles of the nonius track.

6. The method of any one of the previous claims wherein a harmonic of the at least one periodic function is equal to the sum of the number of multipoles of the master track and the number of multipoles of the nonius track.

7. The method of any one of the previous claims wherein measuring at least four components comprises measuring at least two pairs of orthogonal components.

8. The method of any one of the previous claims further comprising determining a plurality of corrected positions based on the correction function and linearizing the corrected positions to match the reference positions.

9. The method of the previous claim wherein linearizing the corrected positions comprises providing a corrective value by interpolation of points stored in a look-up table.

10. A method of sensing the position of a magnetic structure comprising providing the calibration coefficient by following the method of any one of the previous claims, determining the position of the magnetic structure , and applying the calibration function.

11. The method of the previous claim wherein measuring the position further comprises using a counter to track the change of position of the magnetic structure.

12. A magnetic sensor system for a position sensor comprising a movable magnetic structure including a master track and nonius track, each track comprising multipoles wherein the number of multipoles of the master track is different from the number of multipoles of the nonius track and a magnetic sensor configured to measure at least four components of the magnetic field and provide respective measurement signals, and further comprising a processing unit for processing measurement signals programmed with the calibration coefficient obtained by any one of the previous claims.

13. The magnetic sensor system of the previous claim further comprising control means for controlling the acquisition of measurement signals for performing the method of claims 1 to 10 upon start up of the movement.

14. The magnetic sensor system of any one of claims 11 to 13 further comprising a counter for providing information of the position of the master track.

Start calibration

Move magnetic structure over calibration range ～101

102～ Measure magnetic field values

Receive reference positions over the calibration range (e.g. using a reference encoder, or moving the magnetic structure a constant speed) ～104

103～ Compute positions over calibration range based on magnetic field values

Derive position errors over range (incl. cross talk error) and compute coefficients of at least one periodic function minimizing position errors across range ～105

Obtain difference between the reference and raw positions ～106

Program coefficients (e.g. in sensor chip memory) ～107

Derive cross-talk corrected positions (with coefficients computed before) ～108

Compute linearization coefficients minimizing residual error ～109

Program linearization coefficients (e.g. in sensor chip) ～110

*FIG. 1*

```
┌─────────────────────────────┐
│   Provide magnetic structure │ ⌐201
└─────────────────────────────┘
              │
              ▼
┌─────────────────────────────────────────┐
│ Measure magnetic field values from sensor chip │ ⌐202
│           (e.g. Bx1, Bz1)                 │
└─────────────────────────────────────────┘
              │
              ▼
┌─────────────────────────────────────────┐
│     Obtain absolute position value        │ ⌐203
│ (e.g. using Bx2 and Bz2, or using a counter) │
└─────────────────────────────────────────┘
              │
              ▼
┌─────────────────────────────────────────┐
│   Retrieve coefficients from memory       │ ⌐204
│        (e.g. on-chip memory)              │
└─────────────────────────────────────────┘
              │
              ▼
┌─────────────────────────────────────────┐
│    Derive cross-talk corrected position   │ ⌐205
│         (using coefficients)              │
└─────────────────────────────────────────┘
              │
              ▼
┌ ─ ─ ─ ─ ─ ─ ─ ─ ─ ─ ─ ─ ─ ─ ─ ─ ─ ─ ─ ─ ┐
│ Retrieve linearization coefficients from memory │ ⌐206
│              (e.g. LUT)                   │
└ ─ ─ ─ ─ ─ ─ ─ ─ ─ ─ ─ ─ ─ ─ ─ ─ ─ ─ ─ ─ ┘
              │
              ▼
┌ ─ ─ ─ ─ ─ ─ ─ ─ ─ ─ ─ ─ ─ ─ ─ ─ ─ ─ ─ ─ ┐
│ Compute linearization position with linearization │ ⌐207
│ coefficients and received cross-talk corrected position │
└ ─ ─ ─ ─ ─ ─ ─ ─ ─ ─ ─ ─ ─ ─ ─ ─ ─ ─ ─ ─ ┘
              │
              ▼
┌─────────────────────────────┐
│       Output position        │ ⌐208
└─────────────────────────────┘
```

*FIG. 2*

*FIG. 3*

FIG. 4

EP 4 545 910 A1

Residual angle error after each calibration steps

FIG. 5

FIG. 6

FIG. 7

*FIG. 8*

Europäisches
Patentamt

European
Patent Office

Office européen
des brevets

# EUROPEAN SEARCH REPORT

Application Number

EP 23 20 6454

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 4 019 905 B1 (MELEXIS TECH SA [CH]) 16 August 2023 (2023-08-16) * Abstract, Desc. [0049]-[0053], [0081]-[0120], Figs. 1-4 * | 1-14 | INV. G01D5/14 G01D5/244 G01D18/00 |
| A | EP 4 187 209 A1 (MELEXIS TECH SA [CH]) 31 May 2023 (2023-05-31) * Abstract, Desc. [0065]-[0080], Figs. 1-5 * | 1-14 | |
| A | US 2023/296416 A1 (BRAJON BRUNO [CH] ET AL) 21 September 2023 (2023-09-21) * Abstract, Desc. [0089]-[0092], Figs. 1-2 * | 1-14 | |
| A | EP 4 170 287 A1 (MELEXIS TECH SA [CH]) 26 April 2023 (2023-04-26) * Abstract, Desc. [0076]-[0083], Fig. 1 * | 1-14 | |
| | | | TECHNICAL FIELDS SEARCHED (IPC) |
| | | | G01D |

The present search report has been drawn up for all claims

| Place of search | Date of completion of the search | Examiner |
|---|---|---|
| Munich | 19 February 2024 | Reim, Klaus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 23 20 6454

This annex lists the patent family members relating to the patent documents cited in the above-mentioned European search report.
The members are as contained in the European Patent Office EDP file on
The European Patent Office is in no way liable for these particulars which are merely given for the purpose of information.

19-02-2024

| Patent document cited in search report | | Publication date | Patent family member(s) | | Publication date |
|---|---|---|---|---|---|
| EP 4019905 | B1 | 16-08-2023 | CN | 114659443 A | 24-06-2022 |
| | | | EP | 4019905 A1 | 29-06-2022 |
| | | | EP | 4239295 A2 | 06-09-2023 |
| | | | US | 2022196435 A1 | 23-06-2022 |
| | | | US | 2023213359 A1 | 06-07-2023 |
| EP 4187209 | A1 | 31-05-2023 | CN | 116164778 A | 26-05-2023 |
| | | | EP | 4187209 A1 | 31-05-2023 |
| | | | JP | 2023078105 A | 06-06-2023 |
| | | | US | 2023160722 A1 | 25-05-2023 |
| US 2023296416 | A1 | 21-09-2023 | NONE | | |
| EP 4170287 | A1 | 26-04-2023 | CN | 116026230 A | 28-04-2023 |
| | | | EP | 4170287 A1 | 26-04-2023 |
| | | | US | 2023128615 A1 | 27-04-2023 |

EPO FORM P0459

For more details about this annex : see Official Journal of the European Patent Office, No. 12/82

**REFERENCES CITED IN THE DESCRIPTION**

**Patent documents cited in the description**

- EP 4019905 B1